# EUROPEAN PATENT SPECIFICATION

(11) **EP 3 266 752 B1**
(45) Date of publication and mention of the grant of the patent: **10.07.2024**
(21) Application number: 16759008.2
(22) Date of filing: 03.03.2016
(51) Int. Cl.: C03B 20/00, C01B 33/12, C01B 33/18, C03B 8/02, C08F 2/44, C08F 2/50

(54) **SILICA GLASS PRECURSOR PRODUCTION METHOD, SILICA GLASS PRECURSOR, SILICA GLASS PRODUCTION METHOD**
QUARZGLASVORLÄUFERHERSTELLUNGSVERFAHREN, QUARZGLASVORLÄUFER, QUARZGLASHERSTELLUNGSVERFAHREN
PROCÉDÉ DE PRODUCTION DE PRÉCURSEUR DE VERRE DE SILICE, PRÉCURSEUR DE VERRE DE SILICE, PROCÉDÉ DE PRODUCTION DE VERRE DE SILICE

(30) Priority: 04.03.2015 JP 2015042986; 27.01.2016 JP 2016013784
(43) Date of publication of application: 10.01.2018
(73) Proprietor: Kyushu University National University Corporation, Fukuoka 812-8581 (JP)
(72) Inventor: FUJINO, Shigeru, Fukuoka-shi Fukuoka 812-8581 (JP)
(74) Representative: HGF
(86) International application number: PCT/JP2016/056625
(87) International publication number: WO 2016/140316

(56) References cited:
- EP-A1- 0 532 113
- WO-A1-2011/004852
- JP-A- 2002 145 633
- JP-A- 2005 145 766
- JP-A- 2006 232 582
- JP-A- 2015 003 860
- HIROSHI IKEDA ET AL: "Preparation of SiO2-PVA nanocomposite and monolithic transparent silica glass by sintering", CERAMIC SOCIETY OF JAPAN. JOURNAL, vol. 119, no. 1385, 1 January 2011 (2011-01-01), Tokyo, JP, pages 65 - 69, XP055506658, ISSN: 1882-0743, DOI: 10.2109/jcersj2.119.65
- DONG W-Y ET AL: "Preparation and characterization of preferentially oriented continuous MFI-type zeolite membranes from porous glass", MICROPOROUS AND MESOPOROUS MATER, ELSEVIER, AMSTERDAM, NL, vol. 76, no. 1-3, 1 December 2004 (2004-12-01), pages 9 - 15, XP004622891, ISSN: 1387-1811, DOI: 10.1016/J.MICROMESO.2004.07.013
- RAUSCHER M ET AL: "Hydrothermal transformation of porous glass granules into ZSM-5 granules", MICROPOROUS AND MESOPOROUS MATER, ELSEVIER, AMSTERDAM, NL, vol. 75, no. 3, 2 November 2004 (2004-11-02), pages 195 - 202, XP004601764, ISSN: 1387-1811, DOI: 10.1016/J.MICROMESO.2004.06.029
- GALARNEAU A ET AL: "CONTROLLING THE MORPHOLOGY OF MESOSTRUCTURED SILICAS BY PSEUDOMORPHIC TRANSFORMATION: A ROUTE TOWARDS APPLICATIONS", ADVANCED FUNCTIONAL MATERIALS, WILEY - V C H VERLAG GMBH & CO. KGAA, DE, vol. 16, no. 13, 5 September 2006 (2006-09-05), pages 1657 - 1667, XP001244987, ISSN: 1616-301X, DOI: 10.1002/ADFM.200500825
- ZDRAVKOV BORISLAV ET AL: "Pore classification in the characterization of porous materials: A perspective", OPEN CHEMISTRY, vol. 5, no. 2, 1 June 2007 (2007-06-01), pages 385 - 395, XP055872593, Retrieved from the Internet <URL:https://www.degruyter.com/view/journals/chem/5/2/article-p385.xml> DOI: 10.2478/s11532-007-0017-9
- SHIGERU FUJINO: "Kikai Kako Seikeisei ni Sugureta Mesoporous Silica to sore o Mochiita Kinosei Silica Glass no Kaihatsu", DAI 31 KAI MUKI ZAIRYO NI KANSURU SAIKIN NO KENKYU SEIKA HAPPYOKAI, NIPPON SHEET GLASS FOUNDATION FOR MATERIALS SCIENCE AND ENGINEERING, 27 January 2014 (2014-01-27), XP009505868

## Description

### Technical Field

The present invention relates to a silica glass precursor (composite molded body), a silica glass precursor production method, and a silica glass production method. In particular, it is an object of the present invention to provide a dense and porous silica glass precursor obtained at low cost, a method for producing the silica glass precursor, and its use.

### Background Art

Silica glass having excellent physical properties such as low thermal expansivity, thermal stability, insulation properties, and high transmissivity in ultraviolet to visible regions is an important basic material conventionally utilized in large amounts. The silica glass is used for a crucible for pulling a semiconductor single crystal, a high-intensity lamp tube, a photomask substrate, and several kinds of optical components or the like utilizing these features. The silica glass has a high viscosity of 10⁴ kg·m⁻¹·s⁻¹ (Pa·s) even in a high temperature region of about 2000°C.

For this reason, in the mainstream of a method for producing silica glass having a complex shape, the silica glass is melted at about 2300 to 2600°C, and molded to a certain level of shape once. A processing technique provided by the skilled craftsman is required for more precise processing. When a lens and a crucible or the like are produced, the precision polishing of not only a shape but also a surface is required. Particularly, a more complex surface shape makes it extremely difficult to provide a smooth surface during polishing. For this reason, the development of an energy saving silica glass production process which allows low-temperature sintering and molding is desired.

Conventionally, in order to produce silica glass having a desired shape, a sample produced by a melting method or a synthesizing method is molded and polished by machine processing or craftsman's hands, and finally, it is necessary to polish a surface. However, actually, it is extremely difficult. Then, hitherto, examples of a technique of producing silica glass having a complex three-dimensional shape include a slip cast method and a powder sintering method. Both the methods add silica powder, a dispersing agent, and a binder to distilled water to prepare a silica slurry as an aqueous solution in order to improve dispersibility.

Furthermore, it takes a long time of 1 week for an evaporation drying process to cast the slurry into a desired mold form, to provide a desired shape, and the mold form is then removed. The technique requires a lot of production time, and accordingly causes high cost. Furthermore, it is difficult to produce highly transparent silica glass (that is, transparent body) from silica particles.

In such a situation, production methods for simply obtaining silica glass having excellent characteristics have been continuously groped. As one of such production methods, a technique of first producing a silica glass precursor, and merely annealing the silica glass precursor to produce silica glass shows promise also from the viewpoint of cost.

The silica glass precursor is also referred to as a composite molded body. The silica glass precursor is formed in a complex shape utilizing a mold or the like to allow silica glass having a complex shape to be easily produced by subsequent annealing, and to allow the silica glass to be utilized also as various uses as an absorbent or the like from its porousness, which is expected as a material having a very high utility value.

However, for example, a method for annealing the silica glass precursor to produce silica glass achieving both sufficient strength and high transparency, and, for example, a method capable of producing a silica glass precursor capable of achieving the silica glass precursor utilizable as a functional material such as absorbent has not yet been known at present.

For example, as a conventional silica glass precursor production method, a method for producing a composite molded body (silica glass precursor) is disclosed, which includes dispersing silica nanoparticles in a solvent to prepare a dispersion solution, dissolving an organic polymer (for example, polyvinyl alcohol) in a solvent to prepare an organic solution, mixing the dispersion solution with the solution to produce a mixed solution, and drying the mixed solution to produce a molded body having a three-dimensional network including the silica nanoparticles and the organic polymer (for example, Patent Literature 1).

However, for example, the above-mentioned Patent Literature 1 indispensably adds the organic polymer such as polyvinyl alcohol, and interposes the organic polymer between silica molecules utilizing the binding action of the organic polymer to promote the intermolecular bond between the silica molecules. In order to exhibit the binding action of the organic polymer, a sufficient quantity of the organic polymer is required to be immersed between the silica molecules. That is, an organic solution containing a certain amount of the organic polymer is required. As a result, the content rate of silica in the organic solution is reduced, and the silica contained in the composite molded body is necessarily in a sparse state. Since the silica glass obtained by annealing the composite molded body has a low silica density, the silica glass causes large volume shrinkage, is brittle, and is apt to collapse, which makes it impossible to maintain sufficient strength as the silica glass.

Therefore, the achievement of a method for producing a silica glass precursor for obtaining silica glass which can achieve both an increase in the density of silica and an improvement in transparency is desired. However, such a production method has not yet been known. For example, the utilization of an alternate material of a raw material which promotes the intermolecular bond such as polyvinyl alcohol is also considered, but such a production method has not yet been known.

A technique also exists, which does not directly produce a silica glass precursor, and can produce a solid matter containing silica upon the application of a polymerization reaction.

For example, a method for producing a photo-curable liquid composition exists, which molds a three-dimensional shaped product for ceramic molding according to a light lamination molding method, and uses an ethylenically unsaturated monomer, a photopolymerization initiator, a comb-shaped organic polymer having a polar group, and inorganic fine particles (silica and alumina or the like) (for example, Patent Literature 2).

In addition, for example, a ceramic optical molding method also exists, which includes the steps of: preparing a slurry containing ceramic powder, a photo-curable binder, and a solvent; forming a ceramic slurry layer having a predetermined thickness using the slurry and curing the slurry layer by light irradiation to form a ceramic cured layer; and continuously repeating the operation of the light irradiation on the ceramic cured layer a predetermined number of times, in order to achieve a production method which can form a ceramic molded body having a particularly complex three-dimensional shape without using a forming die, wherein the ceramic cured layer is sequentially laminated in a predetermined shape to mold a ceramic three-dimensional shaped body (for example, patent Literature 3).

Hiroshi Ikeda et al. "Preparation of SiO2-PVA nanocomposite and monolithic transparent silica glass by sintering", CERAMIC SOCIETY OF JAPAN JOURNAL, vol. 119, no. 1385, 1 January 2011,pages 65-69, describes a procedure for fabricating transparent silica glass that involves the sintering of green bodies prepared from an inorganic- organic nanocomposite. The nanocomposite was prepared from fumed silica and poly(vinyl alcohol) (PVA) .

EP0532113 A1 describes a process for the preparation of shaped ceramic or glass bodies, the porous green body is formed from the starting material for the shaped body in the form of a suspension which contains highly dispersed solid particles, water as dispersant and an organic binder soluble in the dispersant, and is then dried and sintered, one or more monomers as binder and a polymerisation initiator being added to the suspension.

Dong W-Y et al. "Preparation and characterization of preferentially orientated continuous MFI-type zeolite membranes from porous glass", MICROPOROUS AND MESOPOROUS MATTER, ELSEVIER, AMSTERDAM, NL, vol. 76, no. 1-3, 1 December 2004, pages 9-15, describes preferentially oriented and continuous B-Al-ZSM-5 zeolite membranes prepared from B-containing porous glass disks in a mixed vapor of ethylenediamine, tri-n-propylamine and H₂O.

Rauscher M et al. "Hydrothermal transformation of porous glass granules into ZSM-5 granules", MICROPOROUS AND MESOPOROUS MATTER, ELSEVIER, AMSTERDAM, NL, vol. 75, no.3, 2 November 2004, pages 195-202, describes a direct synthesis of ZSM-5 granules from the hydrothermal treatment of porous glass granules, in the presence of monopropylamine, at 175 °C.

Galarneau A et al. "Controlling the morphology of mesostructured silicas by pseudomorphic transformation: A route towards applications", ADVANCED FUNCTIONAL MATERIALS, WILEY - V C H VERLAG GMBH & CO. KGAA, DE, vol. 16, no. 13, 5 September 2006, pages 1657-1667, reviews published pseudomorphic syntheses, and describes the preparation, characterization, and mechanism of formation of MCM-41 and MCM-48-type materials with adjustable pore and particle sizes from various sources of silica.

### Citation List

### Patent Literature

Patent Literature 1: International Publication No. WO2011/004852
Patent Literature 2: Japanese Patent Laid-Open No. 2004-143247
Patent Literature 3: Japanese Patent Laid-Open No. 6-329460

### Summary of Invention

### Technical Problem

However, the conventional method capable of producing the silica glass precursor primarily produces a general three-dimensional shaped product for ceramic molding as with the production method disclosed in the above-mentioned Patent Literatures 2 and 3, for example, and is not specialized to silica glass production use. Whether the bond of a three-dimensional network formed from silica nanoparticles and an organic material has a firm bond which is required for the formation of silica glass and is densely spread for the obtained three-dimensional shaped product is not clear. Furthermore, an optimal producing condition for having the firm bond is not clear.

That is, the satisfaction of sufficient strength and transparency required for silica glass and its precursor even if silica is used as a raw material and the production method disclosed in the above-mentioned Patent Literatures 2 and 3 is used is not shown. Because of this, a method capable of producing the silica glass precursor having sufficient strength and transparency without using the organic polymer for promoting the intermolecular bond such as polyvinyl alcohol used in the conventional silica glass precursor production method (for example, Patent Literature 1) has not yet been known.

The present invention solves the quality and high cost problems of the conventional silica glass precursor production method. That is, the present invention has been made in order to solve the problems, and it is an object of the present invention to provide a method for producing, at low cost, a dense and porous silica glass precursor from which silica glass can be easily formed in a complex shape at low cost, and which can also be utilized in an absorbent or the like utilizing porousness as another use.

### Solution to Problem

The present inventors have conducted earnest studies, have found a silica glass precursor which can be cured in a desired shape (also a complex sensitive shape) in mere few seconds, and is a nano composite material containing silica particles and a resin. In addition, the present inventors have found that the silica glass precursor has a dense mesoporous structure, and further have found that excellent silica glass which is more transparent and can have more complex shape than that of the conventional one at an annealing temperature lower than that of the conventional one can be obtained by using the silica glass precursor, leading to the present invention.

The present invention is defined by the claims. Any subject matter falling outside the scope of the claims is provided for information purposes only.

Provided herein, is a silica glass precursor production method comprising:
a stirring step of stirring a silica solution containing silica particles and a pH adjuster to produce a dispersion solution;
a mixing step of mixing, into the dispersion solution, an initiator solution containing a photopolymerization initiator and an acrylic monomer having a hydroxyl group at one end of an alkyl chain optionally substituted by a substituent, and an acryloyl group optionally substituted by an alkyl group at the other end of the alkyl chain, to produce a mixed solution;
an irradiation step of irradiating the mixed solution with light to form a silica-containing molded body; and
a solidification step of producing a mesoporous silica glass precursor formed by solidifying the silica-containing molded body by annealing and/or drying,
wherein the average particle diameter of the silica particles is 5 nm to 50 nm,
wherein the mesoporous silica glass precursor has mesoporous fine pores of 2 nm to 50 nm.

In the silica glass precursor production method disclosed in the present application, as necessary, a pH value of the dispersion solution produced in the stirring step is controlled from acidity to alkalinity as an average particle diameter of the silica particles is increased from a nano order to a micro order.

In the silica glass precursor production method disclosed in the present application, as necessary, a weight ratio of the acrylic monomer to the photopolymerization initiator in the initiator solution of the mixing step is 99 : 1 to 90 : 10.

In the silica glass precursor production method disclosed in the present application, as necessary, a weight ratio of the dispersion solution to the initiator solution in the mixed solution of the mixing step is 99 : 1 to 80 : 20.

In the silica glass precursor production method disclosed in the present application, as necessary, in the stirring step, the silica solution containing silica particles having an average particle diameter of a nano order and an acidic pH adjuster is stirred to produce the dispersion solution; and the silica glass precursor production method further includes a heating step of heating the mesoporous silica glass precursor obtained in the solidification step under an alkali condition.

Also provided, is a silica glass precursor comprising a porous body, wherein:
the mesoporous porous body has voids of 5 nm to 50 nm; and
a porous crystal having voids of at least 1 nm and less than 5 nm is formed in the voids of the mesoporous porous body.

Also provided, is a silica glass production method for producing silica glass; the method comprising:
forming a silica glass precursor using the method as defined in the claims, and then
subjecting the silica glass precursor to a main annealing step to produce transparent silica glass.

The present invention has developed the energy saving-low cost production process of silica glass. Conventionally, in order to produce silica glass, a production process is complex, and enormous thermal energy is consumed, so that the silica glass is eventually sold as high price product. The present invention can inexpensively produce silica glass as a three-dimensional shaped product or the like, and the silica glass can be widely spread in the world as high-performance glass in not only an optical-electronic part industry and medical equipment but also various fields.

### Brief Description of Drawings

[Figure 1] Figure 1 shows a production flowchart of a silica glass sintered body.
[Figure 2] Figure 2 shows the relationship between the pH of a SiO₂ dispersion solution and a zeta potential or an average particle size.
[Figure 3] Figure 3A shows the relationship between the fine pore diameter and fine pore volume change rate of an obtained light cured body, and Figure 3B illustrates a crystalline body (micro/mesoporous crystalline body) having a micro/mesoporous structure obtained from a light cured body obtained from silica particles of a nano order.
[Figure 4] Figure 4 shows a flowchart of a silica glass production method according to an embodiment of the present invention.
[Figure 5] Figure 5 shows the measurement results of shrinkage ratios at annealing temperatures of a silica glass precursor according to Example 4 of the present invention.
[Figure 6] Figure 6 shows the measurement results of fine pore volume change rates with respect to fine pore diameters at annealing temperatures of the silica glass precursor according to Example 4 of the present invention.
[Figure 7] Figure 7 shows the desorption curve measurement results of water and ethanol to mesoporous silica glass according to Example 5 of the present invention.

### Description of Embodiments

The present inventors found that a high-quality silica glass precursor as a porous material is formed in a process in which an aqueous solution using silica particles, a photo-curable material, and a photo-curing sensitizer is prepared, and further found material selection, a blending ratio thereof, and a process for producing silica glass obtained via the silica glass precursor. Furthermore, the present inventors found a method of forming more complex porousness for the silica glass precursor so as to be suitable for various uses utilizing the porousness of the silica glass precursor.

Here, the porous material means a material having a surface or inside having fine pores, and can be classified into three types depending on the size of the fine pores: a microporous type of 2 nm or less; a mesoporous type of 2 to 50 nm; and a macroporous type of 50 nm or more.

That is, a silica glass precursor production method disclosed herein includes: a stirring step of stirring a silica solution containing silica particles and a pH adjuster to produce a dispersion solution; a mixing step of mixing, into the dispersion solution, an initiator solution containing a photopolymerization initiator and an acrylic monomer having a hydroxyl group at one end of an alkyl chain optionally substituted by a substituent, and an acryloyl group optionally substituted by an alkyl group at the other end of the alkyl chain, to produce a mixed solution; an irradiation step of irradiating the mixed solution with light to form a silica-containing molded body; and a solidification step of producing a mesoporous silica glass precursor formed by solidifying the silica-containing molded body by annealing and/or drying. That is, the plurality of silica particles are assembled and solidified by the present production method, to obtain a mesoporous silica glass precursor having mesoporous-sized fine pores having an assembled clearance of 2 to 50 nm.

The use of the silica glass precursor according to the present embodiment is not limited to one capable of forming silica glass during annealing, and other examples thereof include a silica glass precursor capable of utilizing the silica glass precursor itself also as an adsorbent utilizing the porousness thereof, or the like.

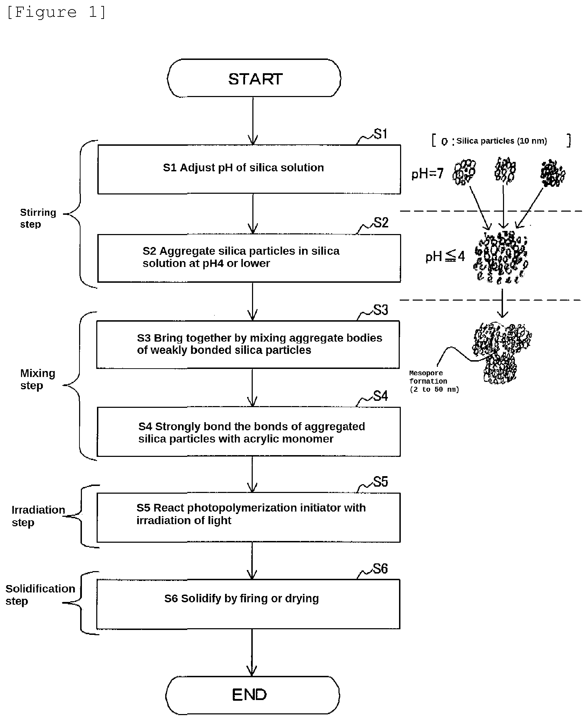

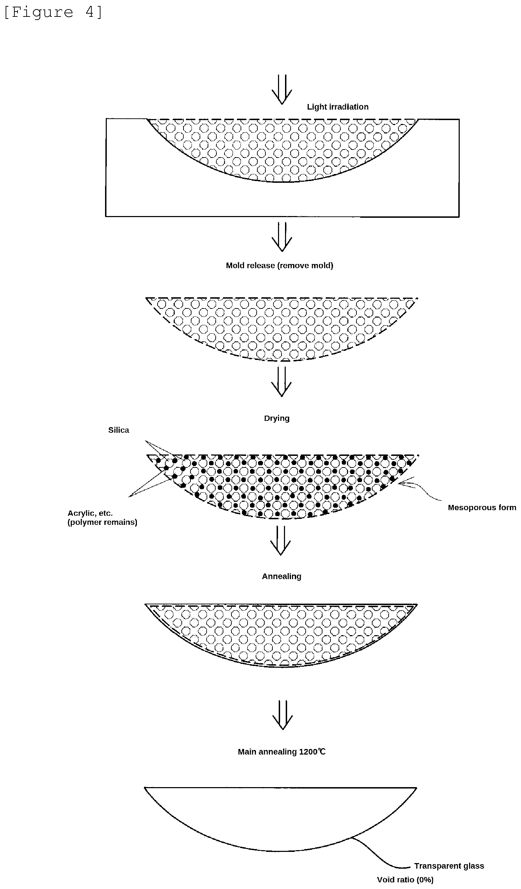

The silica glass precursor production method according to the present embodiment will be described below according to the production flowchart of a silica glass sintered body of Figures 1 and 4.

### (Stirring Step)

First, a silica solution containing silica particles and a pH adjuster is stirred, to produce a dispersion solution (stirring step). That is, first, the pH of the silica solution containing silica particles is adjusted (S1).

The average particle diameter of the silica particles (silica glass powder) as a starting raw material is not particularly limited, and for example, silica particles having various particle diameters including such as silica particles having an average particle diameter of a nanometer order and silica particles having an average particle diameter of a micrometer order can be used(silica particles having an average particle diameter of a micrometer order are not within the scope of the claims).

The pH of the silica solution is preferably controlled from acidity to alkalinity as the average particle diameter of the silica particles is increased from a nano order to a micro order. That is, when the average particle diameter of the silica particles is at a nano order, i.e., fine, the pH of the silica solution is preferably acidic. As the average particle diameter is increased, the pH of the silica solution preferably approaches neutrality. When the average particle diameter is at a micro order, the pH of the silica solution is preferably alkaline.

For example, silica glass powder having a particle size of a nanometer size (nanometer order) can be used as a starting raw material. In this case, particularly, the pH of the solution is preferably in an acidic region (that is, a pH value of less than 7, preferably a pH value of less than 6.1 (for example, a pH value of 4.7 or 6.1), more preferably a pH value of 4 or less, and still more preferably a pH value of 1 to 4, for example, a pH value of 3). At the pH value, the silica glass powder of the nanometer size is likely to be aggregated even in the solution, as a result of which a firmer silica glass precursor is obtained (S2).

The average particle diameter of the silica particles of the nanometer size is not particularly limited as long as it is within the range of a nanometer order. From the viewpoint that a denser mesoporous silica glass precursor is likely to be obtained, the average particle diameter in the present invention is 5 nm to 50 nm, for example, 5 nm to 10 nm (for example, average particle diameter: 7 nm).

Also disclosed, but not within the scope of the claims, silica glass powder having a particle size of a micrometer size (micrometer order) as the other particle diameter can be used, for example. In this case, a nonporous silica glass precursor having a closest packing structure having a high filling rate is obtained, which can exhibit high strength. In this point, the nonporous silica glass precursor has different characteristics from those of a mesoporous silica glass precursor (containing fine pores of 5 to 50 nm) containing the silica particles of the nanometer size (the same in that silica glass having the same high transparency as that of the silica particles of the nanometer size can be obtained), so that the nonporous silica glass precursor can be utilized in uses requiring higher strength.

When the silica glass powder having the average particle diameter of the micrometer order is used, the pH value of the solution is preferably in an alkaline region (that is, a pH value of more than 7, and more preferably a pH value of 7 to 12, for example, a pH value of 7.3). At the pH value, the silica glass powder of the micrometer size is likely to be aggregated even in the solution, as a result of which a firmer silica glass precursor is obtained (S2).

The average particle diameter of the silica particles of the micrometer size is not particularly limited as long as it is within the range of a micrometer order. From the viewpoint that a high-quality silica glass precursor having a closest packing structure is likely to be obtained, the average particle diameter is preferably 0.1 to 100 µm.

That is, the pH value of the dispersion solution produced in the stirring step is preferably adjusted to acidity when the average particle diameter of the silica particles is at a nano order, and the particle diameter in the case is preferably 1 to 100 nm. Meanwhile, the pH value of the dispersion solution is preferably adjusted to alkalinity when the average particle diameter of the silica particles is at a micro order, and the particle diameter in the case is preferably 0.1 to 100 µm.

The pH value of the dispersion solution is not particularly limited. When the average particle diameter of the silica particles is at a nano order, the pH value of the dispersion solution is preferably less than 6.1 (for example, a pH value is 4.7 or 6.1), more preferably 4 or less, and still more preferably 1 to 4. For example, the pH value of the dispersion solution is preferably adjusted to an acidic region having a pH value of 3. When the average particle diameter of the silica particles is at a micro order, the pH value of the dispersion solution is preferably adjusted to an alkaline region having a pH value, of preferably 7 or more, and more preferably 7 to 12, for example, 7.3.

A pH adjuster containing a general acidic solution and alkaline solution can be used as the pH adjuster, and is not particularly limited. For example, in the case of adjustment to alkalinity, a sodium hydroxide solution and an ammonium solution or the like can be used. In the case of adjustment to acidity, a nitric acid solution, a hydrochloric acid solution, or a sulfuric acid solution or the like can be used, for example.

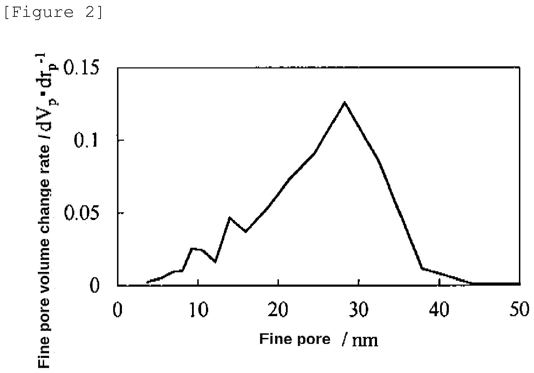

Regarding the correlation between the pH of the dispersion solution and the average particle diameter of the silica particles, Figure 2 shows the relationship between the pH of a SiO₂ dispersion solution (dispersion solution) and a zeta potential or an average particle size as an example. When the average particle diameter of the silica particles is at a nano order, as shown in Figure 2, the zeta potential approaches 0 in the case where the pH of the SiO₂ dispersion solution is 4 or less, and the average particle size is seemingly increased to 200 to 800 nm. This is confirmed as follows. Usually, the surface of the silica particles is negatively charged at a pH of about 7. When the pH is adjusted to 4 or less to bring the zeta potential close to 0, the surface charge of SiO₂ is not charged, so that a repulsive force does not act. Therefore, the interparticle attraction causes the particles to be aggregated, which provides the apparent particles enlarged to 500 nm.

The method for stirring the silica solution is not particularly limited, and for example, stirring using ultrasonic dispersion and a stirring bar or the like can be used.

The silica solution is satisfactory as long as it substantially contains the silica particles and the pH adjuster. In addition, various additives (for example, a granulating agent and a dispersing agent or the like) for improving or stabilizing the characteristics of the silica solution can be added to the silica solution. Examples of the additives include various dispersing agents and various metal oxides. For example, various metal oxides such as titanium oxide, aluminum oxide (alumina), and germanium oxide can be added to the silica solution.

### (Mixing Step)

Next, an initiator solution containing a photopolymerization initiator and an acrylic monomer having a hydroxyl group and an acryloyl group at both ends of a straight alkyl group respectively is mixed into the dispersion solution, to produce a mixed solution (mixing step).

The mixing provides a situation in which the aggregate bodies of the weakly bonded silica particles are likely to be aggregated (S3). In order to promote the aggregation, an organic polymer containing a hydroxyl group (for example, polybutyl alcohol, polyisobutyl alcohol, polyalkylene glycol, and polyvinyl alcohol or the like) may be added into the initiator solution, although not necessary, but even if the organic polymer is not added, the aggregation can be sufficiently promoted.

The acrylic monomer is not particularly limited as long as it has a hydroxyl group at one end of an alkyl chain optionally substituted by a substituent, and an acryloyl group optionally substituted by an alkyl group at the other end of the alkyl chain. For example, 4-HBA (4-hydroxybutyl acrylate), 2-HEA (2-hydroxyethyl acrylate), 2-HEM (2-hydroxyethyl methacrylate), HPA (hydroxypropyl acrylate), HPM (hydroxypropyl methacrylate), and 1-A,3-M,2-P(1-acryloxy-3-methacryloxy-2-propanol) or the like may be used alone or in a combination of two or more. Furthermore, as the same acrylic monomer, APG-400 (polypropylene glycol #400 diacrylate), AE-400 (polyethylene glycol monoacrylate), AP-400 (polypropylene glycol monoacrylate), CHDMMA (cyclohexane dimethanol monoacrylate), and IBA (isobutyl acrylate) may be added alone or in a combination of two or more.

Among the acrylic monomers, acrylic monomers represented by the following general formula (I) are more preferably used alone or in a combination of two or more.

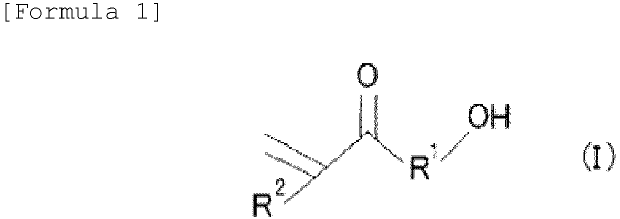

In the formula, R¹ represents a straight alkyl group optionally substituted by a methyl group or an ethyl group and having carbon atoms of 1 to 5, and R² represents an alkyl group having carbon atoms of 1 to 5 or a hydrogen atom.

Examples of the acrylic monomers represented by the general formula (I) include 4-HBA (4-hydroxybutyl acrylate), 2-HEA (2-hydroxyethyl acrylate), 2-HEM (2-hydroxyethyl methacrylate), HPA (hydroxypropyl acrylate), and HPM (hydroxypropyl methacrylate). Among these, 4-HBA (4-hydroxybutyl acrylate) represented by the following chemical formula (I-1), 2-HEM (2-hydroxyethyl methacrylate) represented by the chemical formula (I-2), and 2-HEA (2-hydroxyethyl acrylate) represented by the chemical formula (I-3) are preferable.

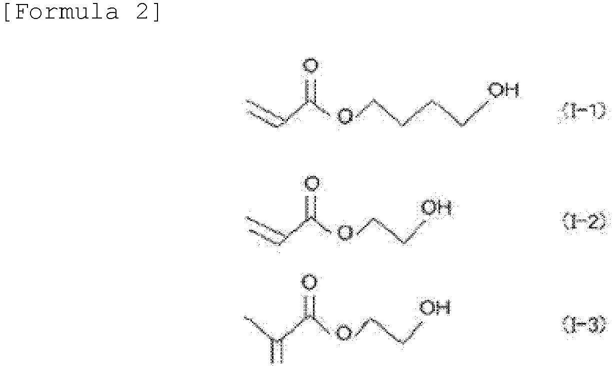

4-HBA (4-hydroxybutyl acrylate) of which the chain length of the straight alkyl group is longer is more preferable. The bond of the aggregated silica particles is strongly bonded with the acrylic monomer to obtain dense and excellent mesoporous voids (S4).

A mechanism producing the strong bond is not clarified in detail. However, it is inferred that the hydroxyl group of the acrylic monomer produces high bond strength between the silica particles during pH adjustment, and a straight alkyl group constituting the acrylic monomer and having a moderate chain length produces also pliant bond strength between the silica particles. This cannot be obtained from unit operations such as mere mixing, stirring, and pH operation and combinations thereof as in the conventional technique. As a result, the silica glass precursor according to the present embodiment has characteristics such as non-conventional strength and high transparency as described later.

Particularly, silica glass obtained by a light cured body (silica glass precursor) formed by using 4-HBA (4-hydroxybutyl acrylate), 2-HEM (2-hydroxyethyl methacrylate), or 2-HEA (2-hydroxyethyl acrylate) for the acrylic monomer is confirmed to be extremely transparent, and have non-conventional characteristics providing a formable complex shape. The silica glass precursor according to the present embodiment has sufficient strength. However, when pliability is desired to be added to the silica glass precursor, an urethane-based acrylic monomer is preferably mixed at a predetermined ratio in addition to the acrylic monomer. The urethane-based acrylic monomer is a compound containing ester of carbamic acid also referred to as carbamate. The mixing of the urethane-based acrylic monomer makes it possible to apply moderate pliability to the obtained silica glass precursor. The mixing ratio can be controlled depending on the use and object of the obtained silica glass precursor. For example, a silica glass precursor having a higher value attached to strength than to pliability can be obtained by setting the mixing ratio of the urethane-based acrylic monomer to the acrylic monomer to a relatively low ratio. For example, a silica glass precursor having a higher value attached to pliability than to strength can be obtained by setting the mixing ratio of the urethane-based acrylic monomer to the acrylic monomer to a relatively high ratio.

The photopolymerization initiator is not particularly limited as long as it is generally used, and from the viewpoint of the ease of handling, the photopolymerization initiator is preferably a ketone compound. As the compound, for example, 1-hydroxy-cyclohexyl-phenyl-ketone, 2,4,6-trimethylbenzoyl-diphenyl-phosphine oxide), and 2-ethyl anthraquinone or the like can be used.

The weight ratio of the acrylic monomer to the photopolymerization initiator in the initiator solution is not particularly limited, and from viewpoint that mesoporous porousness is likely to be formed, the weight ratio is more preferably 99 : 1 to 80 : 20, and still more preferably 99 : 1 to 90 : 10.

### (Irradiation Step)

Next, the mixed solution is irradiated with light to form a silica-containing molded body (irradiation step).

A light source for light irradiation is not particularly limited. For example, an LED which emits ultraviolet rays or near-ultraviolet rays can be used. The light irradiation causes the photopolymerization initiator to serve as a trigger, to start a polymerization reaction, thereby forming a silica-containing molded body (S5).

### (Solidification Step)

Next, a mesoporous silica glass precursor is produced, which is formed by solidifying the silica-containing molded body by annealing and/or drying (solidification step).

The annealing and/or drying are not particularly limited. The annealing can be performed at an annealing temperature, of preferably 1000°C to 1500°C, and more preferably 1200°C to 1400°C, for example, 1300°C. For the drying, natural drying can also be performed in addition to forced drying using a drier (S6).

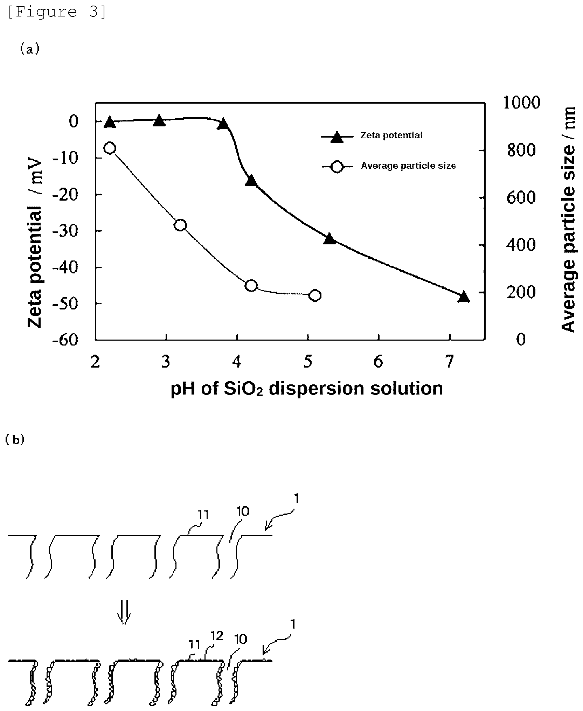

Here, the significant point is that the obtained light cured body (silica glass precursor) is a composite material of silica particles and resin, and has a mesoporous structure having an average fine pore diameter of about 30 nm (a total fine pore volume: 1.33 cm³g⁻¹, a specific surface area: 196.4 m²g⁻¹, and a void ratio: 68.3% are shown from the obtained results) as shown in Figure 3A.

Thus, in the present embodiment, the silica glass precursor having high strength is obtained. This excellent mechanism has not yet been clarified in detail. However, it is inferred that the aqueous solution in which the aggregated bodies of the weakly bonded silica particles are strongly bonded with the acrylic monomer is obtained to certainly form the firm silica-containing molded body including abundant mesoporous porousness during light irradiation, and thereby forming a situation where the silica glass precursor having high strength is likely to be obtained by merely annealing and/or drying the silica-containing molded body. The obtained aqueous solution is cast into a mold having an arbitrary shape, and irradiated with light (ultraviolet rays or near-ultraviolet rays), to react a photopolymerization initiator, which exhibits an excellent effect allowing a light cured body having an arbitrary shape (complex shape is also possible) to be produced.

Furthermore, the obtained silica glass precursor (light cured body) is not limited to the use in which silica glass is obtained by high-temperature annealing. In addition, when the silica glass precursor is particularly formed from the silica particles of a nano order, as shown in Figure 3B, a silica glass precursor as a finer porous crystal can be obtained by heating under an alkali condition. The heating under the alkali condition can be carried out by immersing and dissolving a silica glass precursor into an alkaline solution (for example, 2 to 24 hours), for example, and thereafter heating (for example, 12 hours at 150°C) (a so-called hydrothermal reaction is also included). The alkaline solution is not particularly limited as long as it exhibits alkalinity, and a surfactant such as an ammonium compound may be added.

Figure 3A shows that, by heating a silica glass precursor (light cured body) 1 (the upper side of Figure 3A) on which a mesoporous porous body 11 is formed under an alkali condition (for example, a hydrothermal reaction), a structure in which voids 10 having a complex shape are formed by a mesoporous porous crystal 12 further formed in a multiple form on the surface of the mesoporous porous body 11 is formed (the lower side of Figure 3A). Thus, in the silica glass precursor (light cured body) 1, the porous crystal 12 having voids of 1 nm to 5 nm is formed on the surface of the mesoporous porous body 11 having voids 10 of 5 nm to 50 nm, and the silica glass precursor 1 has a multilayer porous structure (also referred to as micro/mesoporous structure) provided by the voids 10 having the complex shape.

The present inventors have eventually annealed the silica glass precursor at 1300°C to burn an organic matter, thereby succeeding in obtaining extremely transparent silica glass having a void ratio of 0% (see Examples to be described later). Thereby, it is confirmed that the extremely highly transparent silica glass which can also have a complex shape can be easily produced at low cost as compared with the conventional one.

In the irradiation step, for example, as shown in Figure 4, the mixed solution stored in a mold is irradiated with light, and then released from the mold (removed from the mold). The silica glass precursor can be molded in a desired shape according to the solidification step.

Thus, it is shown that the silica glass precursor as the porous material is an excellent material as the precursor of silica glass as described above, but the silica glass precursor is not limited to the use, and can be utilized for further various uses such as an adsorbent and a filter having a water-absorbing property and a sustained-release property from its excellent porousness.

For example, generally, the porous material is used as a separation membrane or an adsorbent utilizing the fine pores. Examples of the porous material include MCM-41 (Mobil Crystalline Material 41) which is a mesoporous silica crystal containing silica as a main raw material. MCM-41 is a crystal of mesoporous silica developed by Mobil in 1992, has a six-membered ring structure in which Si is bonded via O, and has a specific surface area of 300 to 700 m²g⁻¹ and a fine pore diameter of 1.5 to 10 nm.

As with MCM-41, examples of a mesoporous material having a two-dimensional hexagonal structure (honeycomb structure) include FSM-16. These are used as a carrier of a catalyst, and an adsorbent for comparatively large molecules such as DNA and protein. Similarly, zeolite (for example, ZSM-5) is also known to have fine pores referred to as regular micro holes (holes having a diameter of 0.1 to 1 nm), and to have properties such as positive ion exchange ability, catalyst ability, and adsorption ability, and is utilized for many uses such as gas separation, removal of moisture in an organic solvent, and a water quality detergent. At present, the main form of the porous silica crystal is a powder form.

An efficient film separation method using the porous crystals formed as a film is expected. However, the film alone has no strength which can endure the use thereof. A binder is needed in order to make this massive. However, the use of the binder causes deterioration in adsorption characteristics or the like.

Meanwhile, the silica glass precursor (mesoporous silica glass precursor) using the nanoparticles according to the present embodiment allows the production of micro/mesoporous silica which has a high specific surface area provided by depositing the micro porous crystal in the fine pores (an average of about 20 nm, i.e., mesopores) and has excellent mechanical strength, thereby providing a wide application range. Specifically, the present inventors succeeded also in forming the crystal of MCM-41 or zeolite (for example, ZSM-5) on the surface of the fine pores (mesopores) of about 20 nm of the mesoporous silica glass precursor.

The production method of an example of the silica glass precursor (the micro/mesoporous crystalline body) according to the present embodiment will be shown below.

A mesoporous silica glass precursor is used as a silica source, and water, sodium hydroxide, and hexadecyl trimethylammonium bromide (CTAB) which is a surfactant are used. These are mixed at a predetermined molar ratio, and dissolved under a condition of 2 to 24 h. After the dissolution is completed, hydrothermal synthesis is performed in an autoclave under conditions of 150°C and 12 h. After the hydrothermal synthesis is ended, annealing is performed under retention conditions of 550°C and 6 h to remove the surfactant. Micro/mesoporous silica having an unprecedented high specific surface area of 483 m²g⁻¹, an average fine pore diameter of 7.84 nm, and excellent mechanical strength can be produced after the dissolution for 4 h, the hydrothermal synthesis under conditions of 150°C and 12 h, and the final annealing.

The production method will be also shown as follows.

### [1. Preparation of Silica Particle Dispersion Aqueous Solution (First Preparing Step)]

Water is added to silica particles (average particle diameter: 7 nm) so that the concentration of the silica particles is set to a desired concentration (for example, 33.5 wt%), followed by performing ultrasonic dispersion for 10 to 30 minutes, for example, for 15 minutes. This provides a silica particle dispersion aqueous solution (suspension) uniformly dispersed in a solvent without aggregating the silica particles. The ultrasonic dispersion or the time therefor are just one example. The method and the time are not particularly limited as long as the aggregation of the silica particles can be dissociated. The silica particles may be dispersed in a solvent by stirring using a stirring bar or the like.

In the present embodiment, the silica particles having an average particle diameter of 7 nm are used, but the average particle diameter of the silica particles is not limited thereto. Silica particles having an average particle diameter of 5 nm or more and 50 nm or less can be used. In this case, the pH value of the silica particle dispersion aqueous solution (suspension) is adjusted to acidity. The particle size of the silica particles in this case may be at a nano order, and is preferably 5 nm or more and 50 nm or less.

Also disclosed, but not within the scope of the claims, the particle size of the silica particles of a micro order can be used, and the pH value of the silica particle dispersion aqueous solution (suspension) is adjusted to alkalinity. The particle size of the silica particles in this case may be at a micro order, and is preferably 100 µm or more, and more preferably 5 µm or more and 50 µm or less.

### [2. Preparation of Acrylic Monomer and

### Photopolymerization Initiator Solution (Second Preparing Step)]

The acrylic monomer and the photopolymerization initiator are mixed at a weight ratio of 99 : 1 to 90 : 10 to prepare a solution. Then, examples of usable monomers and photopolymerization agents will be shown below.

### [List of Usable Monomers and Polymerization Initiators]

### [Monomers]

4-HBA (4-hydroxybutyl acrylate)
2-HEA (2-hydroxyethyl acrylate)
2-HEM (2-hydroxyethyl methacrylate)
HPA (hydroxypropyl acrylate)
HPM (hydroxypropyl methacrylate)
1-A,3-M,2-P (1-acryloxy-3-methacryloxy-2-propanol)

### [Addable monomers]

APG-400 (polypropylene glycol #400 diacrylate)
AE-400 (polyethylene glycol monoacrylate)
AP-400 (polypropylene glycol monoacrylate)
GM (glycidyl methacrylate)
CHDMMA (cyclohexane dimethanol monoacrylate)
IBA (isobutyl acrylate)

### [Polymerization Initiator]

IRGACURE^{®} 184 (1-hydroxy-cyclohexyl-phenyl-ketone)
IRGACURE^{®} TPO (2,4,6-trimethylbenzoyl-diphenyl-phosphine oxide)2-ethylanthraquinone

The silica slurry prepared in the first preparing step and the solution prepared in the second preparing step are mixed at a weight ratio of 99 : 1 to 80 : 20 to prepare a solution. The adjusted aqueous solution is cast into a mold having an arbitrary shape, and irradiated with ultraviolet or visible light for about 5 seconds to about 60 seconds, to obtain a light cured body (silica glass precursor).

Hereinafter, Examples will be described. However, Examples merely illustrate a silica glass precursor according to the present invention, and do not limit the present invention.

### (Example 1)

A silica slurry prepared in the first preparing step of the Examples described above and a solution prepared in the second preparing step were mixed at a weight ratio of 99 : 1 to 80 : 20 to prepare a solution. The prepared aqueous solution was cast into a mold having an arbitrary shape, and irradiated with ultraviolet or visible light for about 5 seconds to about 60 seconds, to confirm the light curing of the solution. A molded body having the arbitrary shape was obtained by removing from the mold form. As examples, the results of Examples will be shown in Table 1.

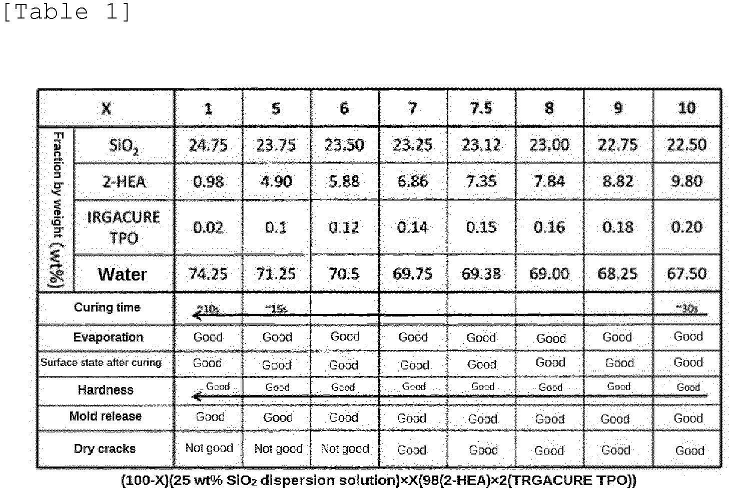

In all the results, a silica glass precursor cured in a desired shape within a curing time of 10 seconds to 30 seconds could be obtained. The precursor was dried at 30°C in a drier for 1 hour to have a mesoporous structure having an average fine pore diameter of about 30 nm and a specific surface area of 196.4 m²g⁻¹. When the three-dimensional shaped product having the mesoporous structure is annealed at 1000°C, the three-dimensional shaped product functions as an adsorbent having excellent mechanical strength and a filter having a water-absorbing property and a sustained-release property. Transparent silica glass having a three-dimensional shape could be obtained by eventual annealing at 1300°C. Thereby, as compared with the conventional method, an article having a complex shape could be easily produced at low cost.

The results of performing experiments using various acrylic monomers as raw materials to verify various characteristics such as the transparency of the obtained silica glass will be shown in the following Tables 2 and 3. From the obtained results, particularly, the silica glass obtained by a light cured body (silica glass precursor) formed by using 4-HBA (4-hydroxybutyl acrylate), 2-HEM (2-hydroxyethyl methacrylate), or 2-HEA (2-hydroxyethyl acrylate) as the acrylic monomer was confirmed to be extremely transparent and allow a complex shape, which had non-conventional characteristics.

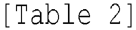

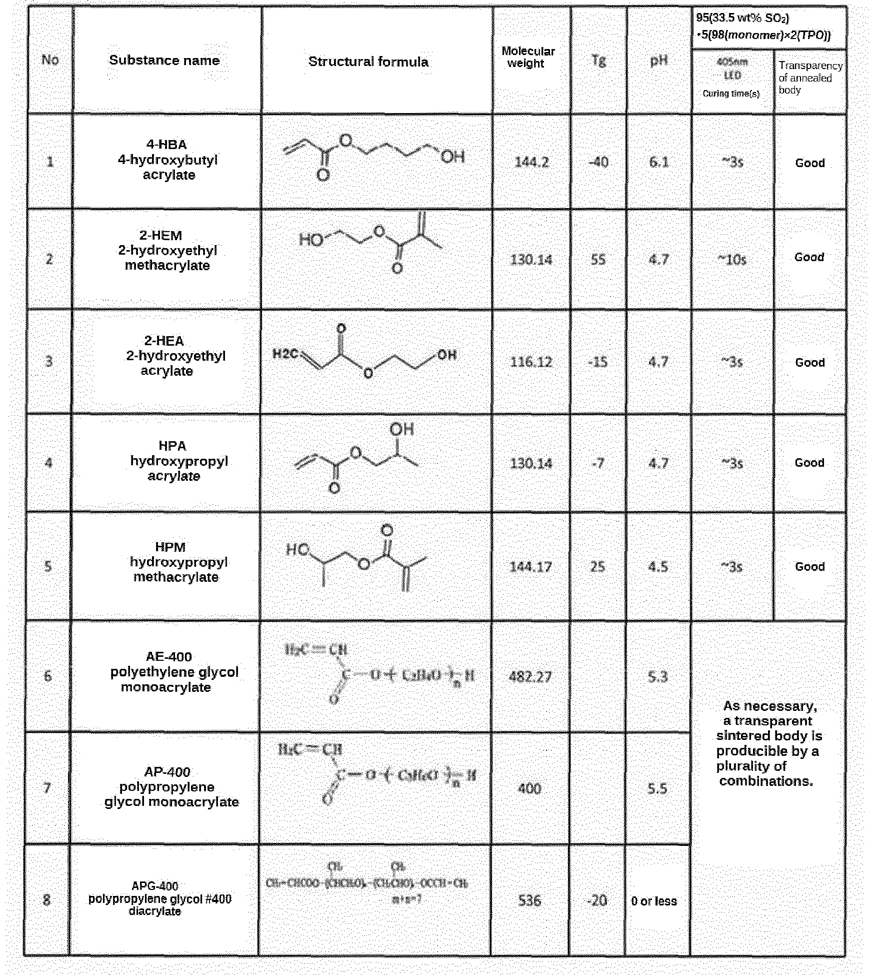

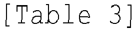

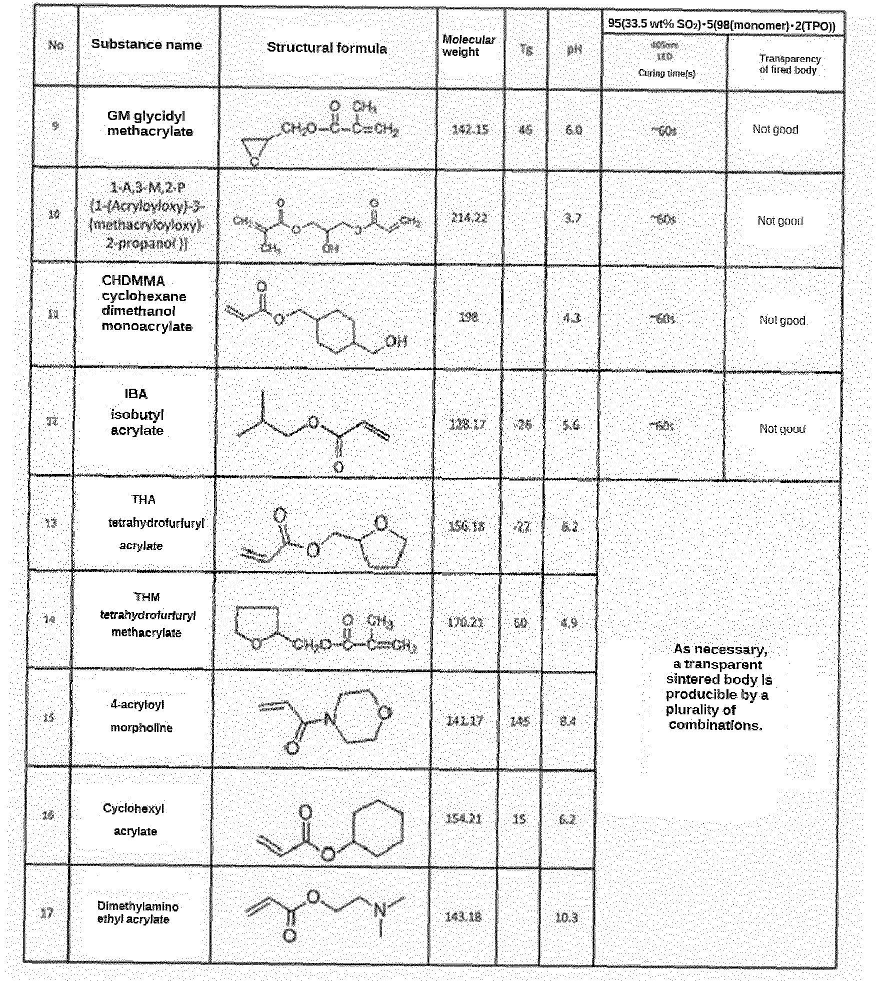

### (Example 2)

### (Nanoparticles)

33.5 g of silica nanoparticles (average primary particle size: 7 nm) were added into 66.5 g of distilled water, followed by ultrasonic dispersion, to produce 100 g of a 33.5 wt% silica nanoparticle dispersion solution. 100 µl of HNO₃ was added thereto, to adjust a pH to 3. A photopolymerization initiator (IRGACURE^{®} TPO; diphenyl(2,4,6-trimethylbenzoyl)phosphine oxide) was added into a monomer (4-hydroxybutyl acrylate, 4-HBA) at a ratio of monomer : polymerization initiator = 98 : 2 (wt%), to produce a monomer-polymerization initiator mixed-solution. The obtained silica nanoparticle dispersion solution and monomer-polymerization initiator mixed-solution were mixed at a predetermined ratio (for example, 99 : 1 to 70 : 30, and more suitably 99 : 1 to 95 : 5), to produce a SiO₂-(4HBA) mixed-solution. The mixed-solution was cast into a container, and irradiated with UV-LED light having a wavelength of 385 nm to obtain a SiO₂-(4-HBA) gel. The gel was removed from a mold, and dried at 30°C to obtain a SiO-₂-(4-HBA) nano composite. The fine pore structure of the nano composite had a mesoporous structure having an average fine pore diameter of about 30 nm (total fine pore volume: 1.33 cm³g⁻¹, specific surface area: 196.4 m²g⁻¹, void ratio: 68.3%). As a result of annealing the obtained nano composite at 1200°C to 1300°C in air, N₂, Ar, He gas, or a vacuum atmosphere, massive silica glass transparent bodies were obtained. The chemical constitutions of the obtained glass transparent bodies will be shown in the following Table 4.

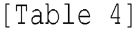

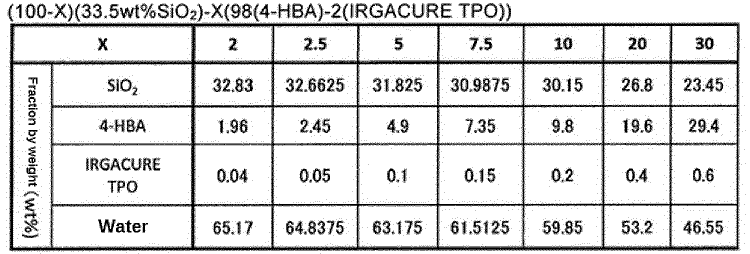

### (Example 3)

The influences of an acrylic monomer (4HBA) and a photopolymerization initiator (IRGACURE^{®} TPO) changed under the same conditions as that of Example 2 described above, on an end glass product were confirmed. The photopolymerization initiator (IRGACURE^{®} TPO; diphenyl(2,4,6-trimethylbenzoyl)phosphine oxide) was added into the monomer (4-hydroxybutyl acrylate, 4-HBA) at a ratio of monomer : polymerization initiator = (100-x) : x (wt%) (dispersion solution: [acrylic monomer (4HBA) and photopolymerization initiator (IRGACURE^{®} TPO)] was set to a constant value of 95 : 5), and a monomer-polymerization initiator mixed-solution was produced while the ratio x of the polymerization initiator was changed to 1 to 10, to produce a SiO₂-(4HBA) mixed-solution. As a result of annealing the obtained nano composite at 1200°C to 1300°C in air, N₂, Ar, He gas, or a vacuum atmosphere, massive silica glass transparent bodies were obtained. The chemical constitutions of the obtained glass transparent bodies will be shown in the following Table 5.

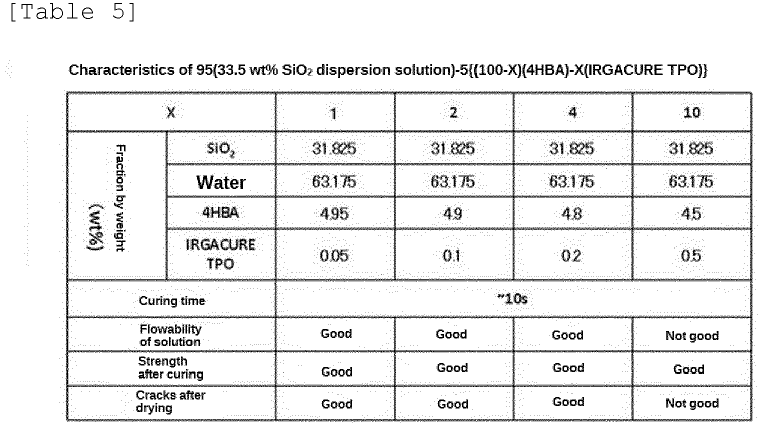

From the obtained results, as the content x of the photopolymerization initiator was increased, the viscosity of the solution tended to be increased. At x = 10, the viscosity was largely increased. At x = 10, cracks during drying slightly occurred from the surface of the sample after light irradiation. The cracks were considered to be apt to occur from the surface since the amount of the polymerization initiator was increased, to cause deterioration in the dispersibility of the silica particles in the solution, and the sample had a nonuniform inner structure in the drying step. From such results, the value of x was preferably 10 or less, and more preferably 4 or less.

### (Example 4)

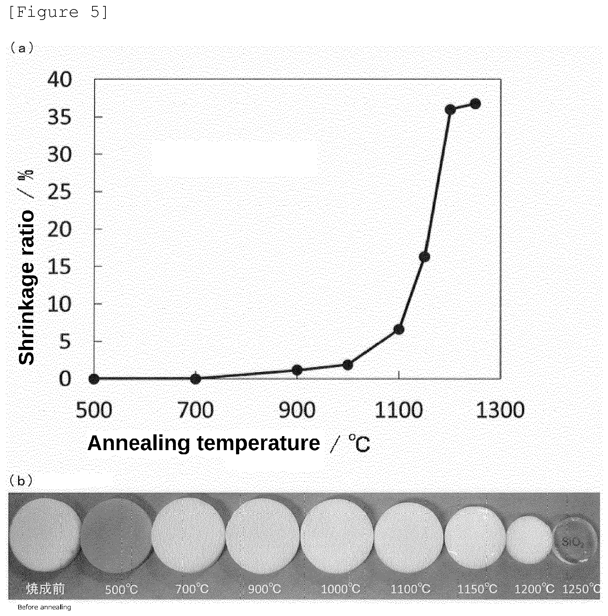

Under the same conditions as that of Example 3 described above, in the case of x = 2, that is, using an acrylic monomer (4HBA) and a photopolymerization initiator (IRGACURE^{®} TPO), a photopolymerization initiator (IRGACURE^{®} TPO; diphenyl(2,4,6-trimethylbenzoyl)phosphine oxide) was added into a monomer (4-hydroxybutyl acrylate, a photopolymerization initiator (IRGACURE^{®} TPO) at a ratio of monomer : polymerization initiator = 98 : 2 (wt%) (dispersion solution: [acrylic monomer (4HBA) and photopolymerization initiator (IRGACURE^{®} TPO)] was set to a constant value of 95 : 5), to produce a monomer-polymerization initiator mixed-solution, and to produce a SiO₂-(4HBA) mixed-solution. The obtained nano composite was annealed at 500°C to 1250°C in air, N₂, Ar, He gas, or a vacuum atmosphere, to obtain massive silica glass transparent bodies. The massive silica glass transparent bodies were held in an electric furnace at temperatures during annealing for 1 hour, and then taken out from the furnace, to measure shrinkage ratios. The measurement results of the annealing temperatures and shrinkage ratios will be shown in Figure 5A. The shooting results of the appearance at the annealing temperatures will be shown in Figure 5B. From the obtained results, shrinkage was confirmed to hardly occur at an annealing temperature of 700°C or lower, and occur at an annealing temperature of 900°C or higher, leading to densification at an annealing temperature of 1250°C. That is, before annealing, an organic matter remained in the body to exhibit a milk white color, and at an annealing temperature of 500°C, the internal organic matter was carbonized to exhibit a black color. A milk white color or a white color was exhibited by internal scattering light at a temperature of higher than 500°C. Eventually, a void ratio was 0 at 1250°C to exhibit perfect transparence.

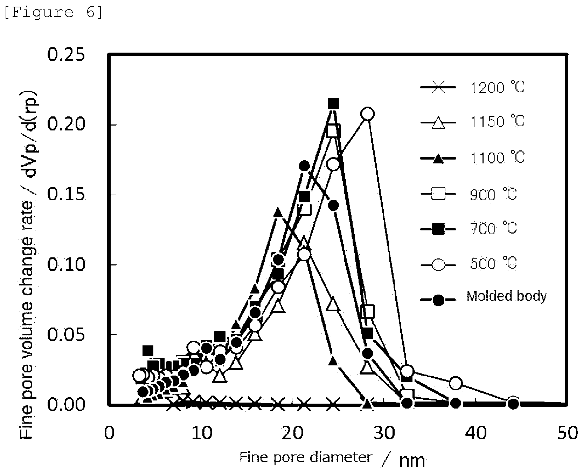

Furthermore, the measurement results of the annealing temperatures and characteristics (BET specific surface area (m²/g), average fine pore diameter (nm), total fine pore volume (cm³/g), and void ratio (%)) will be shown in the following Table 6. The measurement results of the fine pore volume change rates with respect to the fine pore diameters at the annealing temperatures for the silica glass precursor will be shown in Figure 6. From the obtained results, the silica glass precursor particularly formed at an annealing temperature of 500°C to 900°C has a BET specific surface area having a high value reaching about 300 m²/g and a total fine pore volume having a high value reaching 1.14 to 1.38 cm³/g, and is suitable for various uses (for example, a deodorant, an adsorbent, and an aromatic substance or the like) requiring a particularly large surface area.

**[Table 6]**

| Annealing temperature | | Molded body | 500°C | 700°C | 900°C | 1100°C | 1150°C | 1200°C |
|---|---|---|---|---|---|---|---|---|
| BET specific surface area | (m²/g) | 175.17 | 295.98 | 297.75 | 268.48 | 145.72 | 137.57 | 0.05 |
| Average fine pore diameter | (nm) | 22.95 | 18.68 | 16.18 | 17.03 | 18.26 | 18.65 | 204.78 |
| Total fine pore volume | (cm³/g) | 1.0052 | 1.3824 | 1.2046 | 1.1428 | 0.6652 | 0.6413 | 0.0026 |
| Void ratio | (%) | 73.23 | 72.43 | 69.60 | 68.48 | 55.84 | 54.93 | 0.49 |

### (Example 5)

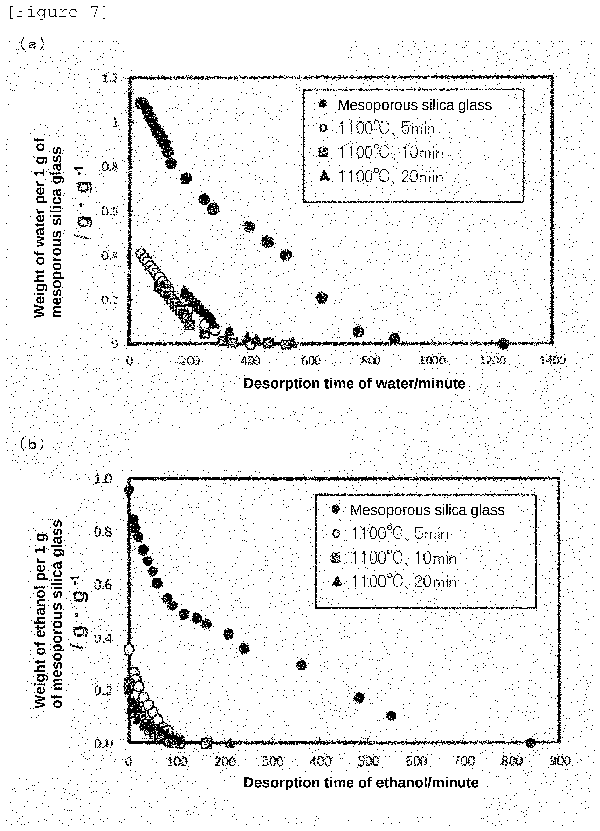

The mesoporous silica glass obtained in the same procedure as that of Example 4 described above was immersed in water and ethanol separately. Figure 7 shows the results of measuring the curves of desorption of water and ethanol to the mesoporous silica glass with a silica glass precursor annealed at an annealing temperature of 1100°C for 5 minutes, a silica glass precursor annealed at an annealing temperature of 1100°C for 10 minutes, and a silica glass precursor annealed at an annealing temperature of 1100°C for 20 minutes as the subject matters. Figure 7A shows a desorption time for water, and Figure 7B shows a desorption time for ethanol. After a time of 2 to 3 minutes, about 1 g each of water and ethanol were adsorbed to 1 g of the mesoporous silica glass. As shown in Figure 7, when the sample was then exposed to the atmosphere, the adsorbed liquid is vaporized out of the sample with a time, and weight reduction was observed. In Figure 7A, the mesoporous silica glass showed a form where inclination in a graph was substantively on a straight line of -0.0011 for a desorption time for water. In Figure 7B, inclination in a graph was substantively on a straight line of -0.0045 before a time of 100 minutes, and inclination in a graph was substantively on a straight line of -0.0007 after the time of 100 minutes for a desorption time for ethanol. It took a time of 1200 minutes to finally vaporize water, and it took a time of 850 minutes to completely vaporize ethanol. The characteristics were confirmed to be applicable for various uses (for example, a deodorant, an adsorbent, and an aromatic substance or the like) utilizing various effects of sustained-release properties since the discharge of components adsorbed in the sample was observed.

### (Reference Example 6)

### (Micro Particles)

80 g of silica micro particles (average primary particle size: 1 µm) were added into 20 g of distilled water, followed by ultrasonic dispersion, to produce 100 g of a silica nanoparticle dispersion solution. 100 µl of an aqueous solution of tetramethylammonium hydroxide (TMA) was added thereto, to adjust a pH to 7.3. A photopolymerization initiator (IRGACURE^{®} TPO; diphenyl(2,4,6-trimethylbenzoyl)phosphine oxide) was added into a monomer (4-hydroxybutyl acrylate, 4-HBA) at a ratio of monomer : polymerization initiator = 98 : 2 (wt%), to produce a monomer-polymerization initiator mixed-solution. The obtained silica nanoparticle dispersion solution and monomer-polymerization initiator mixed-solution were mixed at a predetermined ratio (for example, 99 : 1 to 70 : 30), to produce a SiO₂-(4HBA) mixed-solution. The mixed-solution was cast into a container, and irradiated with UV-LED light having a wavelength of 385 nm to obtain a SiO₂-(4-HBA) gel. The gel was removed from a mold, and dried at 30°C to obtain a SiO-₂-(4-HBA) nano composite. As a result of annealing the obtained nano composite at 1200°C to 1300°C in air, N₂, Ar, or He gas atmosphere, massive silica glass transparent bodies were obtained. As a result of annealing the obtained nano composites at 1300°C to 1600°C in air, N₂, Ar, He gas, or a vacuum atmosphere, massive silica glass transparent bodies were obtained. The chemical constitutions of the obtained glass transparent bodies will be shown in the following Table 7.

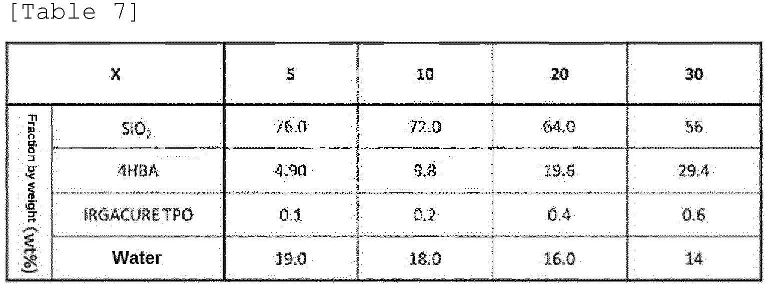

### Reference Signs List

- 1:: silica glass precursor
- 10:: voids
- 11:: porous body
- 12:: porous crystal

## Claims

1. A silica glass precursor production method comprising:
a stirring step of stirring a silica solution containing silica particles and a pH adjuster to produce a dispersion solution;
a mixing step of mixing, into the dispersion solution, an initiator solution containing a photopolymerization initiator and an acrylic monomer having a hydroxyl group at one end of an alkyl chain optionally substituted by a substituent, and an acryloyl group optionally substituted by an alkyl group at the other end of the alkyl chain, to produce a mixed solution;
an irradiation step of irradiating the mixed solution with light to form a silica-containing molded body; and
a solidification step of producing a mesoporous silica glass precursor formed by solidifying the silica-containing molded body by annealing and/or drying,
wherein the average particle diameter of the silica particles is 5 nm to 50 nm,
wherein the mesoporous silica glass precursor has mesoporous fine pores of 2 nm to 50 nm.

2. The silica glass precursor production method according to claim 1,
wherein the pH value of the dispersion solution is less than 7.

3. The silica glass precursor production method according to claim 1 or 2,
wherein a weight ratio of the acrylic monomer to the photopolymerization initiator in the initiator solution of the mixing step is 99 : 1 to 90 : 10.

4. The silica glass precursor production method according to any one of claims 1 to 3,
wherein a weight ratio of the dispersion solution to the initiator solution in the mixed solution of the mixing step is 99 : 1 to 80 : 20.

5. The silica glass precursor production method according to any one of claims 1 to 4,
wherein the acrylic monomer is selected from 4-HBA (4-hydroxybutyl acrylate), 2-HEA (2-hydroxyethyl acrylate), 2-HEM (2-hydroxyethyl methacrylate), HPA (hydroxypropyl acrylate), HPM (hydroxypropyl methacrylate), 1-A,3-M,2-P(1-acryloxy-3-methacryloxy-2-propanol), APG-400 (polypropylene glycol #400 diacrylate), AE-400 (polyethylene glycol monoacrylate), AP-400 (polypropylene glycol monoacrylate), CHDMMA (cyclohexane dimethanol monoacrylate), and IBA (isobutyl acrylate).

6. The silica glass precursor production method according to any one of claims 1 to 5, wherein the photopolymerization initiator is a ketone compound.

7. The silica glass precursor production method according to claim 6, wherein the photopolymerization initiator is selected from 1-hydroxy-cyclohexyl-phenyl-ketone, 2,4,6-trimethylbenzoyl-diphenyl-phosphine oxide), and 2-ethyl anthraquinone.

8. The silica glass precursor production method according to any one of claims 1 to 7,
wherein:
in the stirring step, the silica solution containing silica particles having an average particle diameter of a nano order and an acidic pH adjuster is stirred to produce the dispersion solution; and
the silica glass precursor production method further comprises a heating step of heating the mesoporous silica glass precursor obtained in the solidification step under an alkali condition.

9. A silica glass precursor comprising a porous body, wherein:
the mesoporous porous body has voids of 5 nm to 50 nm; and
a porous crystal having voids of at least 1 nm and less than 5 nm is formed in the voids of the mesoporous porous body.

10. A silica glass production method for producing silica glass; the method comprising:
forming a silica glass precursor using the method according to any one of claims 1 to 8, and then
subjecting the silica glass precursor to a main annealing step to produce transparent silica glass.

## Patentansprüche

1. Quarzglasvorläuferherstellungsverfahren, umfassend:
einen Rührschritt eines Rührens einer Quarzlösung, die Quarzpartikel und einen pH-Regler enthält, um eine Dispersionslösung herzustellen;
einen Mischschritt eines Mischens einer Initiatorlösung, die einen Photopolymerisationsinitiator und ein Acrylmonomer mit einer Hydroxylgruppe an einem Ende einer optional durch einen Substituenten substituierten Alkylkette und einer optional durch eine Alkylgruppe substituierten Acryloylgruppe am anderen Ende der Alkylkette enthält, in die Dispersionslösung, um eine Mischlösung herzustellen;
einen Bestrahlungsschritt eines Bestrahlens der Mischlösung mit Licht, um einen quarzhaltigen Formkörper zu bilden; und
einen Verfestigungsschritt eines Herstellens eines mesoporösen Quarzglasvorläufers, der durch Verfestigen des quarzhaltigen Formkörpers durch Glühen und/oder Trocknen gebildet wird,
wobei der durchschnittliche Partikeldurchmesser der Quarzpartikel 5 nm bis 50 nm beträgt,
wobei der mesoporöse Quarzglasvorläufer mesoporöse Feinporen von 2 nm bis 50 nm aufweist.

2. Quarzglasvorläuferherstellungsverfahren nach Anspruch 1,
wobei der pH-Wert der Dispersionslösung unter 7 liegt.

3. Quarzglasvorläuferherstellungsverfahren nach Anspruch 1 oder 2,
wobei ein Gewichtsverhältnis des Acrylmonomers zu dem Photopolymerisationsinitiator in der Initiatorlösung des Mischschritts 99 : 1 bis 90 : 10 beträgt.

4. Quarzglasvorläuferherstellungsverfahren nach einem der Ansprüche 1 bis 3,
wobei ein Gewichtsverhältnis der Dispersionslösung zu der Initiatorlösung in der Mischlösung des Mischschritts 99 : 1 bis 80 : 20 beträgt.

5. Quarzglasvorläuferherstellungsverfahren nach einem der Ansprüche 1 bis 4,
wobei das Acrylmonomer aus 4-HBA (4-Hydroxybutylacrylat), 2-HEA (2-Hydroxyethylacrylat), 2-HEM (2-Hydroxyethylmethacrylat), HPA (Hydroxypropylacrylat), HPM (Hydroxypropylmethacrylat), 1-A,3-M,2-P (1-Acryloxy-3-methacryloxy-2-propanol), APG-400 (Polypropylenglykol #400-Diacrylat), AE-400 (Polyethylenglykolmonoacrylat), AP-400 (Polypropylenglykolmonoacrylat), CHDMMA (Cyclohexandimethanolmonoacrylat) und IBA (Isobutylacrylat) ausgewählt ist.

6. Quarzglasvorläuferherstellungsverfahren nach einem der Ansprüche 1 bis 5, wobei der Photopolymerisationsinitiator eine Ketonverbindung ist.

7. Quarzglasvorläuferherstellungsverfahren nach Anspruch 6, wobei der Photopolymerisationsinitiator aus 1-Hydroxycyclohexylphenylketon, 2,4,6-Trimethylbenzoyldiphenylphosphinoxid) und 2-Ethylanthrachinon ausgewählt ist.

8. Quarzglasvorläuferherstellungsverfahren nach einem der Ansprüche 1 bis 7,
wobei:
in dem Rührschritt die Quarzlösung, die Quarzpartikel mit einem durchschnittlichen Partikeldurchmesser im Nanobereich und einen sauren pH-Regler enthält, gerührt wird, um die Dispersionslösung herzustellen; und
das Quarzglasvorläuferherstellungsverfahren ferner einen Heizschritt zum Erhitzen des in dem Verfestigungsschritt erhaltenen mesoporösen Quarzglasvorläufers unter alkalischen Bedingungen umfasst.

9. Quarzglasvorläufer, einen porösen Körper umfassend, wobei:
der mesoporöse poröse Körper Hohlräume von 5 nm bis 50 nm aufweist; und
in den Hohlräumen des mesoporösen porösen Körpers ein poröser Kristall mit Hohlräumen von mindestens 1 nm und weniger als 5 nm gebildet ist.

10. Quarzglasherstellungsverfahren zum Herstellen von Quarzglas; wobei das Verfahren Folgendes umfasst:
Bilden eines Quarzglasvorläufers unter Verwendung des Verfahrens nach einem der Ansprüche 1 bis 8, und dann
Unterziehen des Quarzglasvorläufers einem Hauptglühschritt, um transparentes Quarzglas herzustellen.

## Revendications

1. Procédé de production de précurseur de verre de silice comprenant :
une étape d'agitation consistant à agiter une solution de silice contenant des particules de silice et un ajusteur de pH pour produire une solution de dispersion ;
une étape de mélange consistant à mélanger, dans la solution de dispersion, une solution d'initiateur contenant un initiateur de photopolymérisation et un monomère acrylique comportant un groupe hydroxyle à une extrémité d'une chaîne alkyle éventuellement substitué par un substituant, et un groupe acryloyle éventuellement substitué par un groupe alkyle à l'autre extrémité de la chaîne alkyle, pour produire une solution mixte ;
une étape d'irradiation consistant à irradier la solution mixte avec de la lumière pour former un corps moulé contenant de la silice ; et
une étape de solidification consistant à produire un précurseur de verre de silice mésoporeux formé par solidification du corps moulé contenant de la silice par recuit et/ou séchage,
dans lequel le diamètre moyen de particule des particules de silice est de 5 nm à 50 nm,
dans lequel le précurseur de verre de silice mésoporeux comporte des pores fins mésoporeux de 2 nm à 50 nm.

2. Procédé de production de précurseur de verre de silice selon la revendication 1,
dans lequel la valeur de pH de la solution de dispersion est inférieure à 7.

3. Procédé de production de précurseur de verre de silice selon la revendication 1 ou 2,
dans lequel le rapport pondéral du monomère acrylique à l'initiateur de photopolymérisation dans la solution d'initiateur de l'étape de mélange est compris entre 99 : 1 et 90 : 10.

4. Procédé de production de précurseur de verre de silice selon l'une quelconque des revendications 1 à 3,
dans lequel un rapport pondéral de la solution de dispersion à la solution d'initiateur dans la solution mélangée de l'étape de mélange est compris entre 99 : 1 et 80 : 20.

5. Procédé de production de précurseur de verre de silice selon l'une quelconque des revendications 1 à 4,
dans lequel le monomère acrylique est choisi parmi le 4-HBA (acrylate de 4-hydroxybutyle), 2-HEA (acrylate de 2-hydroxyéthyle), 2-HEM (méthacrylate de 2-hydroxyéthyle), HPA (acrylate d'hydroxypropyle), HPM (méthacrylate d'hydroxypropyle), 1-A, 3-M, 2P (1-acryloxy-3-méthacryloxy-2-propanol), APG-400 (diacrylate de polypropylène glycol #400), AE-400 (monoacrylate de polyéthylène glycol), AP-400 (monoacrylate de polypropylène glycol), CHDMMA (monoacrylate de cyclohexane diméthanol) et IBA (acrylate d'isobutyle).

6. Procédé de production de précurseur de verre de silice selon l'une quelconque des revendications 1 à 5, dans lequel l'initiateur de photopolymérisation est un composé cétonique.

7. Procédé de production de précurseur de verre de silice selon la revendication 6, dans lequel l'initiateur de photopolymérisation est choisi parmi 1-hydroxy-cyclohexyl-phénylcétone, oxyde de 2,4,6-triméthylbenzoyl-diphényl-phosphine) et 2-éthyl anthraquinone.

8. Procédé de production de précurseur de verre de silice selon l'une quelconque des revendications 1 à 7,
dans lequel :
lors de l'étape d'agitation, la solution de silice contenant des particules de silice comportant un diamètre de particule moyen d'un ordre nanométrique et un ajusteur de pH acide est agitée pour produire la solution de dispersion ; et
le procédé de production de précurseur de verre de silice comprend en outre une étape de chauffe consistant à chauffer le précurseur de verre de silice mésoporeux obtenu lors de l'étape de solidification dans des conditions alcalines.

9. Précurseur de verre de silice comprenant un corps poreux, dans lequel :
le corps poreux mésoporeux comporte des vides de 5 nm à 50 nm ; et
un cristal poreux comportant des vides d'au moins 1 nm et de moins de 5 nm est formé dans les vides du corps poreux mésoporeux.

10. Procédé de production de verre de silice pour produire du verre de silice; le procédé comprenant :
la formation d'un précurseur de verre de silice à l'aide du procédé selon l'une quelconque des revendications 1 à 8, puis
la soumission du précurseur de verre de silice à une étape principale de recuit pour produire du verre de silice transparent.
